# EUROPÄISCHE PATENTSCHRIFT

(11) **EP 1 767 808 B1**
(45) Veröffentlichungstag und Bekanntmachung des Hinweises auf die Patenterteilung: **30.07.2008**
(21) Anmeldenummer: 06017407.5
(22) Anmeldetag: 22.08.2006
(51) Int. Cl.: F16F 5/00, F16F 9/02, E05F 3/02

(54) **Federsystem**
Spring system
Système de ressort

(30) Priorität: 27.09.2005 DE 102005046268
(43) Veröffentlichungstag der Anmeldung: 28.03.2007
(73) Patentinhaber: Stabilus GmbH, 56070 Koblenz (DE)
(72) Erfinder: Knopp, Axel, 56337 Eitelborn (DE); Bonnekessel, Stefan, 56068 Koblenz (DE); Mintgen, Rolf, 56743 Thuer (DE); Darscheid, Karl-Heinz, 56204 Hillscheid (DE); Massmann, Rainer, 53119 Bonn (DE); Rickenberg, Torsten, 56567 Neuwied (DE); Scheuer, Jörg-Erwin, 76227 Karlsruhe (DE); Herbst, Daniel, Dr., 76133 Karlsruhe (DE); Schweinberger, Dirk, Dr., 76227 Karlsruhe (DE); Völlinger, Joachim, 36137 Grossenlüder (DE)
(74) Vertreter: Klein, Thomas

(56) Entgegenhaltungen:
- DE-A1- 10 147 229
- DE-A1- 10 236 137
- GB-A- 191 405 059

## Beschreibung

Die Erfindung bezieht sich auf ein Federsystem mit einem ersten Zugteil, das ein erstes Befestigungselement aufweist und mit einem zweiten Zugteil, das ein zweites Befestigungselement aufweist, mit einer Zugfeder, durch die das erste Zugteil mit dem zweiten Zugteil verbunden ist und die Zugteile die Zugfeder spannend oder entspannend relativ zueinander bewegbar sind, sowie mit einer Dämpfungseinrichtung, durch die die Zueinanderbewegung der Zugteile über ihren ganzen Bewegungsweg oder einen Teil des Bewegungsweges dämpfbar ist, wobei an dem ersten Zugteil ein zum zweiten Zugteil gerichteter Zylinder befestigt ist, in dem ein Kolben verschiebbar angeordnet ist, der den Innenraum des Zylinders in eine dem ersten Zugteil nähere erste Zylinderkammer und eine dem zweiten Zugteil nähere zweite Zylinderkammer unterteilt und der eine an dem zweiten Zugteil angeordnete Kolbenstange besitzt, wobei der Innenraum des Zylinders über eine oder mehrere Drosselöffnungen mit der Umgebung verbunden ist und wobei der Kolben ein Rückschlagventil aufweist, über das die zweite Zylinderkammer mit der ersten Zylinderkammer verbindbar ist.

Bei einem bekannten Federsystem ist eine Dämpfungseinrichtung ist an dem zweiten Zugteil ein sich zum ersten Zugteil hin verjüngender Konus und an dem ersten Zugteil eine entsprechende Konusaufnahme angeordnet, in die der Konus am Ende der Zueinanderbewegung der Zugteile einfahrbar ist. Dabei erfolgt eine Reibung von Konus und Konusaufnahme aneinander, wodurch die Zueinanderbewegung gedämpft wird.

Diese Dämpfungseinrichtung bietet nur eine mangelhafte Dämpfung.

Aus der GB 05 059 ist ein Federsystem der eingangs genannten Art bekannt.

Aufgabe der Erfindung ist es ein Federsystem der eingangs genannten Art zu schaffen, das einfach aufgebaut ist, eine gute temperaturunabhängige Dämpfung der Zueinanderbewegung der Zugteile insbesondere im letzten Teil ihrer Zueinaderbewegung gewährleistet und bei der die Voneinanderbewegung der Zugteile weniger gedämpft ist.

Diese Aufgabe wird erfindungsgemäß dadurch gelöst, daß an dem Kolben eine radial umlaufende Ringnut ausgebildet ist, in der ein Dichtring geringerer axialer Erstreckung als der axialen Erstreckung der Ringnut verschiebbar angeordnet ist, der mit seiner äußeren Mantelfläche an der Innenwand des Zylinders anliegt und von dem Boden der Ringnut beabstandet ist, wobei von einem nicht von dem Dichtring abdeckbaren Bereich der dem ersten Zugteil näheren Seitenwand der Ringnut Verbindungsöffnungen zur ersten Zylinderkammer führen.

Dieses Federsystem ist mit einfachen Bauteilen und mit geringer Baugröße aufgebaut und besitzt eine Dämpfungseinrichtung, die nach dem Prinzip einer Luftpumpe arbeitet. Sie ist ein offenes und damit temperaturunabhängiges System und hat im Ruhezustand in ihrem Inneren Atmosphärendruck.

Bei Verschieben des zweiten Zugteils zum ersten Zugteil hin wird die in der ersten Zylinderkammer befindliche Luft komprimiert. Dieser Druck baut sich über die Drosselöffnungen ab, die in ihrem Querschnitt so abgestimmt sind, daß die Zueinanderbewegung der Zugteile gedämpft und nicht schlagartig erfolgt. Damit wird auch ein Rückschwingen vermieden, was zu einem unharmonischen Bewegungsablauf führen würde.

Da das Rückschlagventil bei der Zueinanderbewegung der Zugteile geschlossen und bei der Voneinanderbewegung geöffnet ist, ist eine Dämpfung der Zueinanderbewegung größer als bei einer Voneinanderbewegung.

Vorzugsweise dient ein solches Federsystem zum Öffnen einer Klappe eines Kraftfahrzeugs, wobei das eine Zugteil an der Karosserie des Kraftfahrzeugs und andere Zugteil an der Klappe angelenkt ist.

Vorzugsweise ist die zweite Zylinderkammer permanent mit der Umgebung verbunden, wodurch der Aufbau und die Montage des Federsystems besonders einfach wird.

Dabei kann in einfache Weise die Drosselöffnung im Kolben die erste Zylinderkammer mit der zweiten Zylinderkammer verbindend ausgebildet sein.

Dadurch ergibt sich eine etwa gleichmäßige Dämpfung über den gesamten Weg der Zueinanderbewegung der Zugteile.

Dieselbe Funktion wird auch erreicht, wenn zwischen der radial umlaufenden Mantelfläche des Kolbens und der Innenwand des Zylinders ein Ringspalt vorhanden ist, der die Drosselöffnung bildet.

Die Drosselöffnung kann aber auch den dem zweiten Zugteil abgewandten Boden des Zylinders durchragen oder es können die Drosselöffnung oder die Drosselöffnungen radial die Zylinderwand des Zylinders durchragen.

Sind dabei mehrere Drosselöffnungen in gleichmäßigem oder ungleichmäßigem Abstand zueinander entlang der Längserstreckung des Zylinders ausgebildet, ist es möglich eine Geschwindigkeitssteuerung zu erhalten. Je nach dem abhängig von der Position des Kolbens im Zylinder vorhandenen Gesamtquerschnitt der dann die erste Zylinderkammer mit der Umgebung verbindenden Drosselöffnungen ist die momentane Dämpfung bestimmt.

Um nur im Endbereich der Zueinanderbewegung der Zugteile eine sich verstärkenden Dämpfwirkung zu erhalten, können die Drosselöffnungen in dem dem ersten Zugteil näheren Endbereich des Zylinders ausgebildet sein.

Bei Anwendung an einer Klappe bei einem Kraftfahrzeug kann damit am Anfang die Klappe zügig öffnen und das Ende der Öffnungsbewegung gedämpft erfolgen. Durch die am Ende der Öffnungsbewegung reduzierte Geschwindigkeit wird ein Rückschwingen vermieden. Am Hubende ist der Düsenquerschnitt so reduziert, daß ein sanfter Endanschlag gewährleistet ist.

Eine weitere Möglichkeit zur Ausbildung der Drosselöffnung besteht darin, daß die Drosselöffnung eine an der Innenwand des Zylinders ausgebildete Drosselnut ist, die sich entlang der Längserstreckung des Zylinders erstreckt. Da die Drosselnut bei Verschiebung des Kolbens auch immer wieder offenliegend wird, kann sie sich nicht durch Verschmutzungen zusetzen.

Dabei ist die Dämpfwirkung über den gesamten Hub konstant, wenn die Drosselnut auf ihrer gesamten Länge einen gleichen Querschnitt besitzt.

Besitzt die Drosselnut entlang ihrer Länge unterschiedliche Querschnitte, so kann damit eine Geschwindigkeitssteuerung über den Hub bewirkt werden.

In einfacher Weise ist die Zugfeder einer Schraubenzugfeder.

Umschließt dabei die Schraubenzugfeder den Zylinder mit radialem Spiel, so führt dies zu einem kompakten Aufbau mit nur geringem Bauraumbedarf.
Entspricht die axiale Länge des Kolbens zumindest weitgehend der axialen Länge des Zylinders, so erhält der Kolben eine gute Führung über seinen Bewegungsweg im Zylinder.

Dies ist auch erreichbar, wenn die Kolbenstange einen nur wenig geringeren Durchmesser besitzt als der Kolben. Dabei besitzt die Kolbenstange zur Luftabfuhr vorzugsweise eine oder mehrere Längsnuten.

Zu einem kostengünstigen Aufbau führ es , wenn das erste Zugteil und der Zylinder und/oder das zweite Zugteil und die Kolbenstange und/oder der Kolben einteilig ausgebildet sind, wobei das erste Zugteil und der Zylinder und/oder das zweite Zugteil und die Kolbenstange und/oder der Kolben Kunststoffteile, insbesondere Kunststoffspritzgußteile sein können.

Sowohl zu einer einfachen Montierbarkeit als auch zu einem einfachen Aufbau führt es, wenn das erste Zugteil und/oder das zweite Zugteil eine zylindrische Mantelfläche besitzt, die mit einem Außengewinde versehen ist, auf das ein Ende der Schraubenzugfeder mit seinen Windungen aufschraubbar ist.

Dabei wird weiterhin eine geringere Beanspruchung der Zugfeder in ihrem Befestigungsbereich am Zugteil erreicht.

Ist darüber hinaus das eine und/oder das andere freie Ende der Schraubenzugfeder zu einem axial über das erste bzw. das zweite Zugteil hinausragenden Haken geformt, der das erste bzw. das zweite Befestigungselement bildet, so erfüllt die Schraubenzugfeder eine Doppelfunktion.

Das Federsystem kann eine Spannvorrichtung zum Einstellen der Vorspannung der Zugfeder besitzen. Eine Möglichkeit dafür besteht darin, daß das zweite Zugteil axial zum Kolben oder zur Kolbenstange verstellbar ist.

Dies kann bei einfachem Aufbau und stufenlos dadurch ermöglicht werden, daß das zweite Zugteil eine auf einer mit Außengewinde versehenen Hülse aufgeschraubte Mutter ist, wobei die Hülse mit ihrem dem ersten Zugteil zugewandten Ende an dem Kolben axial abgestützt ist und wobei vorzugsweise die Hülse auf der Kolbenstange axial verschiebbar geführt angeordnet ist.

Eine andere Möglichkeit zum Einstellen der Vorspannung der Zugfeder besteht darin, daß das zweite Zugteil in Stufen oder stufenlos in mehreren Axialpositionen an der Kolbenstange arretierbar ist.

Dazu kann eine stufenlose Einstellung dadurch erfolgen, daß das zweite Zugteil eine auf der mit einem Außengewinde versehenen Kolbenstange aufgeschraubte Mutter ist.

Es ist aber möglich, daß daß das zweite Zugteil einen Befestigungszapfen besitzt, der an seinem einen Ende das zweite Befestigungselement trägt und in eine Koaxialausnehmung der Kolbenstange ragt, in der er in mehreren Axialpositionen durch ein oder mehrere Arretierelemente arretierbar ist, wozu vorzugsweise die Kolbenstange eine Querausnehmung besitzt, in die ein Riegel einsetzbar ist, der formschlüssig in eine von mehreren im axialen Abstand zueinander an dem Befestigungszapfen ausgebildeten entsprechenden Arretierausnehmungen des Befestigungszapfens ragt.

Eine Feineinstellung ist dabei dadurch möglich, daß der Befestigungszapfen einseitig oder zweiseitig mit Zahnreihen versehen ist und die Zahnlükken zwischen den Zähnen der Zahnreihen die Arretierausnehmungen bilden.

Eine weitere Einstellung der Vorspannung der Zugfeder ist dadurch möglich, daß die Zugfeder in mehreren Axialpositionen an dem ersten Zugteil und/oder an dem zweiten Zugteil oder an der Kolbenstange befestigbar ist.

Dabei kann das dem ersten Zugteil zugewandte und/oder das dem zweiten Zugteil zugewandte Ende der Zugfeder als Haken ausgebildet und in eine von mehreren axial hintereinander angeordneten Ausnehmungen einhakbar sein.

Besonders einfach kann dabei eine Verstellung der Vorspannung erfolgen, wenn in dem ersten Zugteil und/oder dem zweiten Zugteil oder in der Kolbenstange ein koaxialer Verstellschlitz ausgebildet ist, von dem in axialem Abstand zueinander Arretierschlitze begrenzter Länge ausgehen, die radial oder zur Zugfeder geneigt ausgebildet sind.

Ausführungsbeispiele der Erfindung sind in der Zeichnung dargestellt und werden im folgenden näher beschrieben. Es zeigen
- Figur 1: eine Ansicht eines ersten Ausführungsbeispiels eines Federsystems
- Figur 2: einen Querschnitt des Federsystems entlang der Linie I - I In Figur 3
- Figur 3: eine Querschnittansicht eines zweiten Ausführungsbeispiels eines Federsystems
- Figur 4: ein weiteres Ausführungsbeispiel eines Federsystems im Bereich des zweiten Zugteils im Querschnitt
- Figur 5: ein weiteres Ausführungsbeispiel eines Federsystems im Bereich des zweiten Zugteils im Querschnitt
- Figur 6: ein weiteres Ausführungsbeispiel eines Federsystems im Bereich des zweiten Zugteils im Querschnitt
- Figur 7: ein weiteres Ausführungsbeispiel eines Federsystems im Bereich des zweiten Zugteils im Querschnitt.

Die in den Figuren dargestellten Federsysteme weisen ein erstes Zugteil 1 auf, an dem ein Zylinder 2 einteilig angeordnet ist.

In dem Zylinder 2 ist ein Kolben 3 axial verschiebbar angeordnet, der den Innenraum des Zylinders in eine erste Zylinderkammer 4 und eine zweite Zylinderkammer 5 unterteilt.

An dem Kolben 3 ist einteilig eine Kolbenstange 6 angeordnet, die durch die zweite Zylinderkammer 5 hindurch nach außen geführt ist.

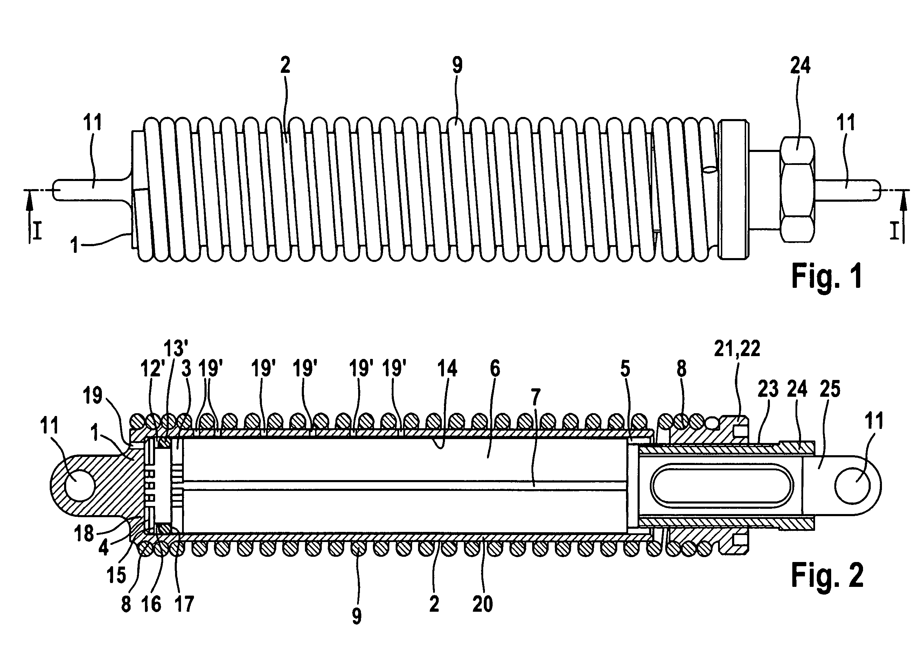

Die Kolbenstange 6 besitzt einen gegenüber dem Innendurchmesser des Zylinders 2 nur wenig kleineren Außendurchmesser, wobei an der äußeren Mantelfläche der in Figur 2 dargestellten Kolbenstange 6 noch eine sich über deren ganze Länge erstreckende Axialnut 7 ausgebildet ist.

Die zweite Zylinderkammer 5 mündet offen nach außen.
Das erste Zugteil besitzt eine zylindrische Mantelfläche, die mit einem Außengewinde 8 versehen ist, auf das ein Ende einer Schraubenzugfeder 9 mit deren Windungen aufgeschraubt ist.

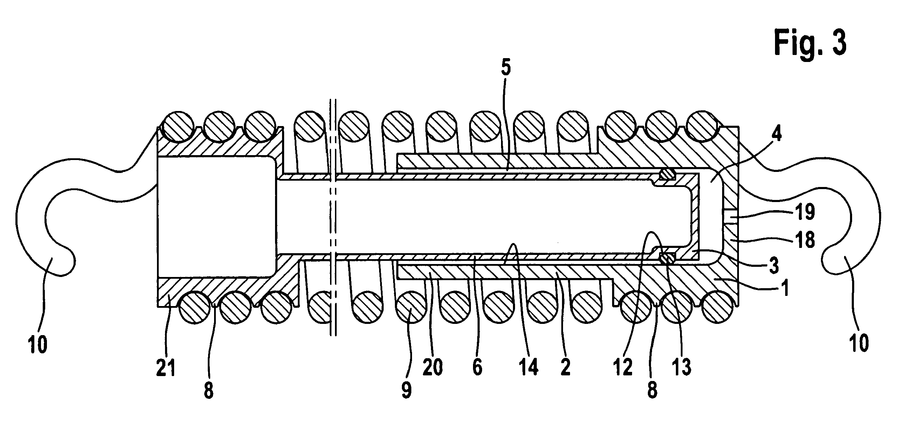

In Figur 3 ist das freie Ende der Schraubenzugfeder 9 um das erste Zugteil 1 herumgeführt und zu einem Haken 10 geformt, der auf der dem Zylinder 2 entgegengesetzten Seite axial von dem ersten Zugteil 1 wegragt und ein Befestigungselement bildet.

Bei dem Ausführungsbeispiel der Figuren 1 und 2 ist ein entsprechendes als Öse 11 ausgebildetes Befestigungselement einteilig mit dem ersten Zugteil 1 ausgebildet.

In Figur 3 besitzt der Kolben 3 eine radial umlaufende Ringnut 12, in die ein Dichtring 13 eingesetzt ist, der an der Innenwand 14 des Zylinders 2 in Anlage ist und die erste Zylinderkammer 4 von der zweiten Zylinderkammer 5 sowohl bei einer Einfahr- als auch einer Ausfahrbewegung des Kolbens 3 voneinander trennt.

In den Figuren 1 und 2 ist an dem Kolben 3 ebenfalls eine radial umlaufende Ringnut 12' ausgebildet, in ein Dichtring 13' eingesetzt ist, dessen axiale Erstreckung geringer ist als die axiale Erstreckung der Ringnut 12' und in der der Dichtring 13' axial verschiebbar ist.

Mit seiner äußeren Mantelfläche liegt der Dichtring 13' an der Innenwand 14 des Zylinders 2 an, ist aber auf der Seite des Bodens der Ringnut 12' unterströmbar.

In der dem zweiten Zugteil 1 näheren Seitenwand 15 sind als Verbindungsnuten 16 ausgebildete Verbindungsöffnungen angeordnet, während die anderen Seitenwand 17 der Ringnut 12 keine derartigen Verbindungsöffnungen besitzt.

Diese Ausbildung bildet ein Rückschlagventil, das bei einer Einschubbewegung des Kolbens in den Zylinder 2 geschlossen und bei einer Ausfahrbewegung geöffnet ist. In der geöffneten Position kann Luft über die Ringnut 12' von der ersten Zylinderkammer 4 in die zweite Zylinderkammer 5 strömen.

Der Zylinder 2 ist auf der Seite des ersten Zugteils 1 durch einen Boden 18 verschlossen, in dem eine axiale Drosselöffnung 19 ausgebildet ist, die die erste Zylinderkammer 4 mit der Umgebung verbindet.

In den Figuren 1 und 2 sind weitere Drosselöffnungen 19' radial in der Zylinderwand 20 des Zylinders 2 in unregelmäßigem Abstand zueinander entlang der Längserstreckung des Zylinders 2 ausgebildet.

Bei einer Einschubbewegung des Kolbens 3 wird die in der ersten Zylinderkammer 4 vorhandene Luft über die Drosselöffnungen 19 und 19' nach außen verdrängt, so daß diese Bewegung gedämpft erfolgt.

Die Schraubenzugfeder 9 umschließt den Zylinder 2 mit radialem Spiel und ist an ihrem dem ersten Zugteil 1 entgegengesetzten Ende mit einem zweiten Zugteil 21 verbunden.

In Figur 3 ist das zweite Zugteil 21 fest an dem aus dem Zylinder 2 herausragenden Ende der Kolbenstange 6 angeordnet und besitzt so, wie das erste Zugteil 1 an seiner radial umlaufenden Mantelfläche ein Außengewinde 8, auf das das Ende der Schraubenzugfeder 9 aufgeschraubt ist.

Weiterhin ist das freie Ende entsprechend der Ausbildung auf der Seite des ersten Zugteils 1 als Haken 10 ausgebildet.

Bei den Ausführungsbeispielen der Figuren 1 und 2 sowie 4 und 5 ist das zweite Zugteil 21 eine Mutter 22, die entsprechend dem zweiten Zugteil 21 in Figur 3 mit einem Außengewinde 8 versehen ist, auf das das Ende der Schraubenzugfeder 9 aufgeschraubt ist.

Ein Haken ist aber nicht durch das freie Ende der Schraubenzugfeder 9 gebildet.

Die Mutter 22 ist auf eine mit einem entsprechenden Außengewinde 23 versehene Hülse 24 aufgeschraubt, die mit ihrem dem ersten Zugteil 1 zugewandten Ende an dem Kolben 3 axial abgestützt ist.

Durch Verdrehen der Hülse 24 relativ zur Mutter 22 kann die Vorspannung der Schraubenzugfeder 9 eingestellt werden.

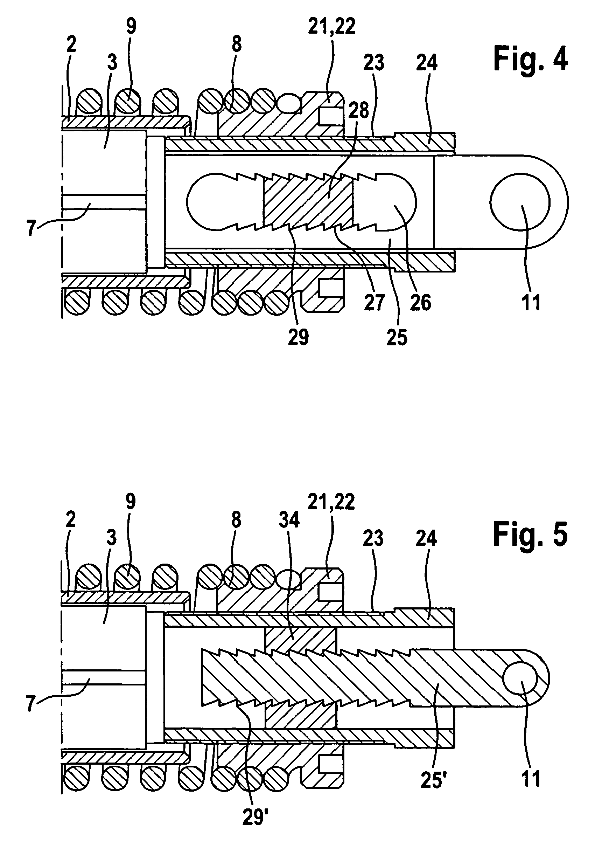

In Figur 4 ist die Axialbohrung der Hülse 24 von einem fest mit der Kolbenstange 6 verbundenen Fortsatz 25 durchragt, der an seinem freien Ende eine als Befestigungselement dienende Öse 11 besitzt.

Eine als Langloch ausgebildete und sich axial erstreckende Querausnehmung 26 mit Sägezahnprofil 29 an ihren Längsseiten ist in der Hülse 24 ausgebildet. In dem Fortsatz 25 ist eine entsprechende Querausnehmung 27 mit geringerer axialer Erstreckung als der Querausnehmung 26 ausgebildet.

Ein Riegel 28 mit dem Querschnitt der Querausnehmung 27 durchragt beide Querausnehmungen 26 und 27.

In Figur 5 ist ebenfalls ein Fortsatz 25' mit einer Öse 11 vorhanden, der aber nicht mit dem Kolben 3 fest verbunden ist.

Der Fortsatz 25' ist an seinen einander gegenüberliegenden Längsseiten mit einem Sägezahnprofil 29' versehen und durch ein darin formschlüssig eingreifendes Sicherungsteil 34 fest verbunden, das wiederum fest mit der Hülse 24 verbunden ist.

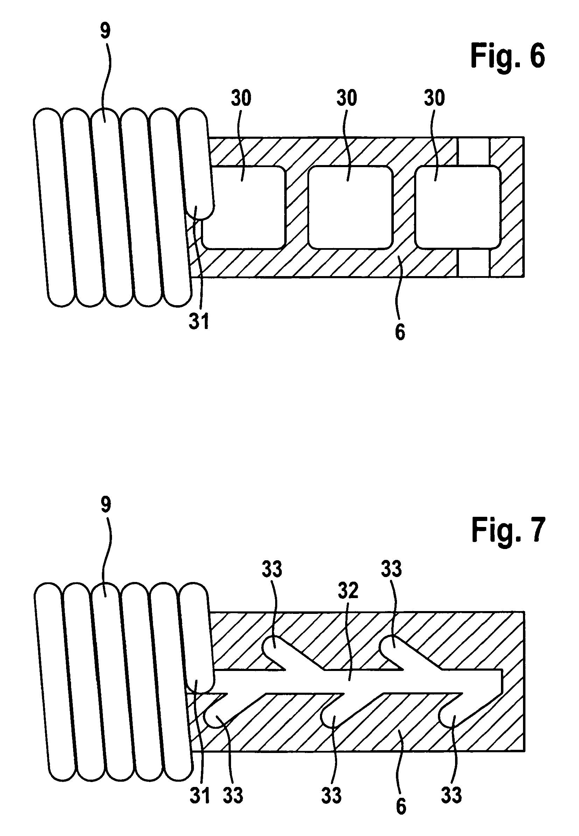

In den Figuren 6 und 7 bildet das freie Ende der Kolbenstange 6 gleichzeitig das zweite Teil 21.

In diesem freien Ende der Kolbenstange 6 sind in Figur 6 mehrere axial hintereinander angeordnete Ausnehmungen 30 ausgebildet, in die das zu einem Haken 31 umgebogene Ende der Schraubenzugfeder 9 einhakbar ist. Je nach der gewählten Ausnehmung 30, in die der Haken 31 eingehakt ist, ist die Vorspannung der Schraubenzugfeder 9 bestimmt.

In dem freien Ende der Kolbenstange 6 ist in Figur 7 ein koaxialer Verstellschlitz 32 ausgebildet, von dem seitlich in axialem Abstand zueinander Arretierschlitze 33 ausgehen.

Die Arretierschlitze 33 besitzen nur begrenzte Länge und verlaufen dem freien Ende der Kolbenstange 6 abgewandt geneigt.

Auch hier ist das Ende der Schraubenzugfeder 9 zu einem Haken 31 umgebogen und greift in einen Arretierschlitz 33 zu Bestimmung der Vorspannung der Schraubenzugfeder 9 ein, wobei er an dem geschlossenen Ende des Arretierschlitzes in Anlage ist.

Zur Veränderung der Vorspannung muß der Haken 31 nur im Arretierschlitz 33 bis zum Verstellschlitz 32 und in diesem zu dem neuen gewünschten Arretierschlitz 33 verschoben und in diesen eingeführt werden.

### Bezugszeichenliste

- 1: erstes Zugteil
- 2: Zylinder
- 3: Kolben
- 4: erste Zylinderkammer
- 5: zweite Zylinderkammer
- 6: Kolbenstange
- 7: Axialnut
- 8: Außengewinde
- 9: Schraubenzugfeder
- 10: Haken
- 11: Öse
- 12: Ringnut
- 12': Ringnut
- 13: Dichtring
- 13': Dichtring
- 14: Innenwand
- 15: Seitenwand
- 16: Verbindungsnuten
- 17: Seitenwand
- 18: Boden
- 19: Drosselöffnung
- 19': Drosselöffnung
- 20: Zylinderwand
- 21: zweites Zugteil
- 22: Mutter
- 23: Außengewinde
- 24: Hülse
- 25: Fortsatz
- 25': Fortsatz
- 26: Querausnehmung
- 27: Querausnehmung
- 28: Riegel
- 29: Sägezahnprofil
- 29': Sägezahnprofil
- 30: Ausnehmungen
- 31: Haken
- 32: Verstellschlitz
- 34: Sicherungsteil
- 33: Arretierschlitz

## Patentansprüche

1. Federsystem mit einem ersten Zugteil (1), das ein erstes Befestigungselement aufweist und mit einem zweiten Zugteil (21), das ein zweites Befestigungselement aufweist, mit einer Zugfeder, durch die das erste Zugteil (1) mit dem zweiten Zugteil (21) verbunden ist und die Zugteile (1, 21) die Zugfeder spannend oder entspannend relativ zueinander bewegbar sind, sowie mit einer Dämpfungseinrichtung, durch die die Zueinanderbewegung der Zugteile (1, 21) über ihren ganzen Bewegungsweg oder einen Teil des Bewegungsweges dämpfbar ist, wobei an dem ersten Zugteil (1) ein zum zweiten Zugteil (21) gerichteter Zylinder (2) befestigt ist, in dem ein Kolben (3) verschiebbar angeordnet ist, der den Innenraum des Zylinders (2) in eine dem ersten Zugteil (1) nähere erste Zylinderkammer (4) und eine dem zweiten Zugteil (21) nähere zweite Zylinderkammer (5) unterteilt und der eine an dem zweiten Zugteil (21) angeordnete Kolbenstange (6) besitzt, wobei der Innenraum des Zylinders (2) über eine oder mehrere Drosselöffnungen (19, 19') mit der Umgebung verbunden ist und wobei der Kolben (3) ein Rückschlagventil aufweist, über das die zweite Zylinderkammer (4) mit der ersten Zylinderkammer (5) verbindbar ist, **dadurch gekennzeichnet, daß** an dem Kolben (3) eine radial umlaufende Ringnut (12') ausgebildet ist, in der ein Dichtring (13') geringerer axialer Erstreckung als der axialen Erstreckung der Ringnut (12') verschiebbar angeordnet ist, der mit seiner äußeren Mantelfläche an der Innenwand (14) des Zylinders (2) anliegt und von dem Boden der Ringnut (12') beabstandet ist, wobei von einem nicht von dem Dichtring (13') abdeckbaren Bereich der dem ersten Zugteil (1) näheren Seitenwand (15) der Ringnut (13') Verbindungsöffnungen zur ersten Zylinderkammer (4) führen.

2. Federsystem nach Anspruch 1, **dadurch gekennzeichnet, daß** die zweite Zylinderkammer (5) permanent mit der Umgebung verbunden ist.

3. Federsystem nach Anspruch 2, **dadurch gekennzeichnet, daß** die Drosselöffnung im Kolben die erste Zylinderkammer mit der zweiten Zylinderkammer verbindend ausgebildet ist.

4. Federsystem nach einem der vorhergehenden Ansprüche, **dadurch gekennzeichnet, daß** die Drosselöffnung (19) den dem zweiten Zugteil (21) abgewandten Boden (18) des Zylinders (2) durchragt.

5. Federsystem nach einem der vorhergehenden Ansprüche, **dadurch gekennzeichnet, daß** die Drosselöffnung oder die Drosselöffnungen (19') radial die Zylinderwand (20) des Zylinders (2) durchragen.

6. Federsystem nach Anspruch 5, **dadurch gekennzeichnet, daß** mehrere Drosselöffnungen (19') in gleichmäßigem oder ungleichmäßigem Abstand zueinander entlang der Längserstreckung des Zylinders (2) ausgebildet sind.

7. Federsystem nach Anspruch 5, **dadurch gekennzeichnet, daß** die Drosselöffnungen (19') in dem dem ersten Zugteil (1) näheren Endbereich des Zylinders (2) ausgebildet sind.

8. Federsystem nach einem der Ansprüche 1 bis 2, **dadurch gekennzeichnet, daß** die Drosselöffnung eine an der Innenwand des Zylinders ausgebildete Drosselnut ist, die sich entlang der Längserstrekkung des Zylinders erstreckt.

9. Federsystem nach Anspruch 8, **dadurch gekennzeichnet, daß** die Drosselnut auf ihrer gesamten Länge einen gleichen Querschnitt besitzt.

10. Federsystem nach Anspruch 8, **dadurch gekennzeichnet, daß** die Drosselnut entlang ihrer Länge unterschiedliche Querschnitte besitzt.

11. Federsystem nach Anspruch 1, **dadurch gekennzeichnet, daß** die Zugfeder einer Schraubenzugfeder (9) ist.

12. Federsystem nach Anspruch 11, **dadurch gekennzeichnet, daß** die Schraubenzugfeder (9) den Zylinder (2) mit radialem Spiel umschließt.

13. Federsystem nach Anspruch 1, **dadurch gekennzeichnet, daß** die axiale Länge des Kolbens (3) zumindest weitgehend der axialen Länge des Zylinders (2) entspricht.

14. Federsystem nach Anspruch 1, **dadurch gekennzeichnet, daß** das erste Zugteil (1) und der Zylinder (2) und/oder das zweite Zugteil (21) und die Kolbenstange (6) und/oder der Kolben (3) einteilig ausgebildet sind.

15. Federsystem nach Anspruch 14, **dadurch gekennzeichnet, daß** das erste Zugteil (1) und der Zylinder (2) und/oder das zweite Zugteil (21) und die Kolbenstange (6) und/oder der Kolben (3) Kunststoffteile, insbesondere Kunststoffspritzgußteile sind.

16. Federsystem nach Anspruch 11, **dadurch gekennzeichnet, daß** das erste Zugteil (1) und/oder das zweite Zugteil (21) eine zylindrische Mantelfläche besitzt, die mit einem Außengewinde (8) versehen ist, auf das ein Ende der Schraubenzugfeder (9) mit seinen Windungen aufschraubbar ist.

17. Federsystem nach Anspruch 16, **dadurch gekennzeichnet, daß** das eine und/oder das andere freie Ende der Schraubenzugfeder (9) zu einem axial über das erste bzw. das zweite Zugteil (1,21) hinausragenden Haken (10) geformt ist, der das erste bzw. das zweite Befestigungselement bildet.

18. Federsystem nach Anspruch 1, **dadurch gekennzeichnet, daß** das zweite Zugteil (21) axial zum Kolben (3) oder zur Kolbenstange (6) verstellbar ist.

19. Federsystem nach Anspruch 18, **dadurch gekennzeichnet, daß** das zweite Zugteil (21) eine auf einer mit Außengewinde (23) versehenen Hülse (24) aufgeschraubte Mutter (22) ist, wobei die Hülse(24) mit ihrem dem ersten Zugteil (1) zugewandten Ende an dem Kolben (3) axial abgestützt ist.

20. Federsystem nach Anspruch 19, **dadurch gekennzeichnet, daß** die Hülse (24) auf der Kolbenstange (6) axial verschiebbar geführt angeordnet ist.

21. Federsystem nach Anspruch 18, **dadurch gekennzeichnet, daß** das zweite Zugteil (21) in Stufen oder stufenlos in mehreren Axialpositionen an der Kolbenstange (6) arretierbar ist.

22. Federsystem nach Anspruch 21, **dadurch gekennzeichnet, daß** das zweite Zugteil eine auf der mit einem Außengewinde versehenen Kolbenstange aufgeschraubte Mutter ist.

23. Federsystem nach Anspruch 21, **dadurch gekennzeichnet, daß** das zweite Zugteil einen Befestigungszapfen besitzt, der an seinem einen Ende das zweite Befestigungselement trägt und in eine Koaxialausnehmung der Kolbenstange ragt, in der er in mehreren Axialpositionen durch ein oder mehrere Arretierelemente arretierbar ist.

24. Federsystem nach Anspruch 23, **dadurch gekennzeichnet, daß** die Kolbenstange eine Querausnehmung besitzt, in die ein Riegel einsetzbar ist, der formschlüssig in eine von mehreren im axialen Abstand zueinander an dem Befestigungszapfen ausgebildeten entsprechenden Arretierausnehmungen des Befestigungszapfens ragt.

25. Federsystem nach Anspruch 24, **dadurch gekennzeichnet, daß** der Befestigungszapfen einseitig oder zweiseitig mit Zahnreihen versehen ist und die Zahnlücken zwischen den Zähnen der Zahnreihen die Arretierausnehmungen bilden.

26. Federsystem nach Anspruch 1, **dadurch gekennzeichnet, daß** die Zugfeder (9) in mehreren Axialpositionen an dem ersten Zugteil und/oder an dem zweiten Zugteil oder an der Kolbenstange (6) befestigbar ist.

27. Federsystem nach Anspruch 26, **dadurch gekennzeichnet, daß** das dem ersten Zugteil zugewandte und/oder das dem zweiten Zugteil (21) zugewandte Ende der Zugfeder (9) als Haken (31) ausgebildet und in eine von mehreren axial hintereinander angeordneten Ausnehmungen (30) einhakbar ist.

28. Federsystem nach Anspruch 27, **dadurch gekennzeichnet, daß** in dem ersten Zugteil und/oder dem zweiten Zugteil oder in der Kolbenstange (6) ein koaxialer Verstellschlitz (32) ausgebildet ist, von dem in axialem Abstand zueinander Arretierschlitze (33) begrenzter Länge ausgehen, die radial oder zur Zugfeder geneigt ausgebildet sind.

## Claims

1. Spring system having a first pulling part (1), which has a first fastening element, and having a second pulling part (21), which has a second fastening element, having a tension spring by means of which the first pulling part (1) is connected to the second pulling part (21), and the pulling parts (1, 21) can be moved relative to one another so as to subject the tension spring to stressing or relieve the same of stressing, and having a damping device by means of which the movement of the pulling parts (1, 21) in relation to one another can be damped over their entire movement path or part of the movement path, it being the case that fastened on the first pulling part (1) is a cylinder (2) which is directed towards the second pulling part (21) and in which a piston (3) is arranged in a displaceable manner, the piston subdividing the interior of the cylinder (2) into a first cylinder chamber (4), which is closer to the first pulling part (1), and a second cylinder chamber (5), which is closer to the second pulling part (21), that is and having a piston rod (6) which is arranged on the second pulling part (21), that the interior of the cylinder (2) is connected to the surroundings via one or more restrictor openings (19, 19'), and that the piston (3) has a non-return valve via which the second cylinder chamber (4) can be connected to the first cylinder chamber (5), **characterized in that** the piston (3) has formed on it a radially encircling annular groove (12') in which a sealing ring (13') with an axial extent which is smaller than the axial extent of the annular groove (12') is arranged in a displaceable manner, the sealing ring having its outer lateral surface butting against the inner wall (14) of the cylinder (2) and being spaced apart from the base of the annular groove (12'), it being the case that connecting openings lead to the first cylinder chamber (4) from a region which forms part of the side wall (15) of the annular groove (13'), this side wall being closer to the first pulling part (1), and which cannot be covered by the sealing ring (13').

2. Spring system according to Claim 1, **characterized in that** the second cylinder chamber (5) is permanently connected to the surroundings.

3. Spring system according to Claim 2, **characterized in that** the restrictor opening in the piston is designed to connect the first cylinder chamber to the second cylinder chamber.

4. Spring system according to one of the preceding claims, **characterized in that** the restrictor opening (19) projects through the base (18) of the cylinder (2), this base being directed away from the second pulling part (21).

5. Spring system according to one of the preceding claims, **characterized in that** the restrictor opening or the restrictor openings (19') projects or project radially through the cylinder wall (20) of the cylinder (2).

6. Spring system according to Claim 5, **characterized in that** a plurality of restrictor openings (19') are formed at uniform or non-uniform spacings from one another along the longitudinal extent of the cylinder (2).

7. Spring system according to Claim 5, **characterized in that** the restrictor openings (19') are formed in that end region of the cylinder (2) which is closer to the first pulling part (1).

8. Spring system according to either of Claims 1 and 2, **characterized in that** the restrictor opening is a restrictor groove which is formed on the inner wall of the cylinder and extends along the longitudinal extent of the cylinder.

9. Spring system according to Claim 8, **characterized in that** the restrictor groove has an identical cross section over its entire length.

10. Spring system according to Claim 8, **characterized in that** the restrictor groove has different cross sections along its length.

11. Spring system according to Claim 1, **characterized in that** the tension spring is a helical tension spring (9).

12. Spring system according to Claim 11, **characterized in that** the helical tension spring (9) encloses the cylinder (2) with radial play.

13. Spring system according to Claim 1, **characterized in that** the axial length of the piston (3) corresponds at least largely to the axial length of the cylinder (2).

14. Spring system according to Claim 1, **characterized in that** the first pulling part (1) and the cylinder (2) and/or the second pulling part (21) and the piston rod (6) and/or the piston (3) are formed in one piece.

15. Spring system according to Claim 14, **characterized in that** the first pulling part (1) and the cylinder (2) and/or the second pulling part (21) and the piston rod (6) and/or the piston (3) are plastic parts, in particular plastic injection mouldings.

16. Spring system according to Claim 11, **characterized in that** the first pulling part (1) and/or the second pulling part (21) have/has a cylindrical lateral surface which is provided with an external thread (8) onto which it is possible to screw one end of the helical tension spring (9) with its coils.

17. Spring system according to Claim 16, **characterized in that** one free end of the helical tension spring (9) and/or the other are/is formed into a hook (10) which projects axially beyond the first and/or the second pulling part (1, 21) and forms the first and/or the second fastening element.

18. Spring system according to Claim 1, **characterized in that** the second pulling part (21) can be adjusted axially in relation to the piston (3) or in relation to the piston rod (6).

19. Spring system according to Claim 18, **characterized in that** the second pulling part (21) is a nut (22) which is screwed onto a sleeve (24) provided with an external thread (23), the sleeve (24) being supported axially on the piston (3) by way of its end which is directed towards the first pulling part (1) .

20. Spring system according to Claim 19, **characterized in that** the sleeve (24) is arranged such that it is guided in an axially displaceable manner on the piston rod (6).

21. Spring system according to Claim 18, **characterized in that** the second pulling part (21) can be arrested in steps, or in a stepless manner, in a number of axial positions on the piston rod (6).

22. Spring system according to Claim 21, **characterized in that** the second pulling part is a nut which is screwed onto the piston rod provided with an external thread.

23. Spring system according to Claim 21, **characterized in that** the second pulling part has a fastening pin which bears the second fastening element at one end and projects into a coaxial recess of the piston rod, in which it can be arrested in a number of axial positions by one or more arresting elements.

24. Spring system according to Claim 23, **characterized in that** the piston rod has a transverse recess into which it is possible to insert a catch which projects in a form-fitting manner into one of a number of corresponding arresting recesses of the fastening pin, these recesses being spaced apart axially from one another on the fastening pin.

25. Spring system according to Claim 24, **characterized in that** the fastening pin is provided, on one side or two sides, with rows of teeth, and the gaps between the teeth of the rows of teeth form the arresting recesses.

26. Spring system according to Claim 1, **characterized in that** the tension spring (9) can be fastened in a number of axial positions on the first pulling part and/or on the second pulling part or on the piston rod (6).

27. Spring system according to Claim 26, **characterized in that** that end of the tension spring (9) which is directed towards the first pulling part and/or which is directed towards the second pulling part (21) is designed as a hook (31) and can be hooked into one of a number of recesses (30) arranged axially one behind the other.

28. Spring system according to Claim 27, **characterized in that** formed in the first pulling part and/or the second pulling part or in the piston rod (6) is a coaxial adjusting slot (32) from which limited-length arresting slots (33) extend at axial spacings from one another, the arresting slots being formed radially or in an inclined manner in relation to the tension spring.

## Revendications

1. Système de ressort comprenant une première partie de traction (1), qui présente un premier élément de fixation, et une deuxième partie de traction (21), qui présente un deuxième élément de fixation, avec un ressort de traction qui relie la première partie de traction (1) à la deuxième partie de traction (21), les parties de traction (1, 21) pouvant être déplacées l'une par rapport à l'autre en tendant ou en détendant le ressort de traction, et comprenant un dispositif d'amortissement, qui permet d'amortir le mouvement des parties de traction (1, 21) l'une par rapport à l'autre sur toute leur course de déplacement ou sur une partie de la course de déplacement, un cylindre (2) orienté vers la deuxième partie de traction (21) étant fixé sur la première partie de traction (1), un piston (3) étant disposé de manière à pouvoir coulisser à l'intérieur du cylindre (2) et divisant l'espace interne du cylindre (2) en une première chambre de cylindre (4) plus proche de la première partie de traction (1) et une deuxième chambre de cylindre (5) plus proche de la deuxième partie de traction (21), et possédant une tige de piston (6) disposée sur la deuxième partie de traction (21), l'espace interne du cylindre (2) étant connecté à l'environnement par le biais d'une ou de plusieurs ouvertures d'étranglement (19, 19'), et le piston (3) présentant une soupape de non-retour, par le biais de laquelle la deuxième chambre de cylindre (5) peut être reliée à la première chambre de cylindre (4), **caractérisé en ce qu'**une rainure annulaire (12') s'étendant radialement sur la périphérique est réalisée sur le piston (3), une bague d'étanchéité (13') d'étendue axiale plus petite que l'étendue axiale de la rainure annulaire (12') étant disposée de manière à pouvoir coulisser dans la rainure annulaire (12') et s'appliquant avec sa surface périphérique extérieure contre la paroi interne (14) du cylindre (2) et étant espacée du fond de la rainure annulaire (12'), des ouvertures de connexion conduisant à la première chambre de cylindre (4) depuis une région de la paroi latérale (15) de la rainure annulaire (12') la plus proche de la première partie de traction (1) qui ne peut pas être recouverte par la bague d'étanchéité (13').

2. Système de ressort selon la revendication 1, **caractérisé en ce que** la deuxième chambre de cylindre (5) est connectée de manière permanente à l'environnement.

3. Système de ressort selon la revendication 2, **caractérisé en ce que** l'ouverture d'étranglement dans le piston est réalisée de manière à relier la première chambre de cylindre à la deuxième chambre de cylindre.

4. Système de ressort selon l'une quelconque des revendications précédentes, **caractérisé en ce que** l'ouverture d'étranglement (19) traverse le fond (18) du cylindre (2) opposé à la deuxième partie de traction (21).

5. Système de ressort selon l'une quelconque des revendications précédentes, **caractérisé en ce que** l'ouverture d'étranglement ou les ouvertures d'étranglement (19') traversent radialement la paroi de cylindre (20) du cylindre (2).

6. Système de ressort selon la revendication 5, **caractérisé en ce que** plusieurs ouvertures d'étranglement (19') sont réalisées à distance régulière ou irrégulière les unes des autres le long de l'étendue longitudinale du cylindre (2).

7. Système de ressort selon la revendication 5, **caractérisé en ce que** les ouvertures d'étranglement (19') sont réalisées dans la région d'extrémité du cylindre (2) la plus proche de la première partie de traction (1).

8. Système de ressort selon l'une quelconque des revendications 1 à 2, **caractérisé en ce que** l'ouverture d'étranglement est une rainure d'étranglement réalisée sur la paroi interne du cylindre, qui s'étend le long de l'étendue longitudinale du cylindre.

9. Système de ressort selon la revendication 8, **caractérisé en ce que** la rainure d'étranglement possède une section transversale identique sur toute sa longueur.

10. Système de ressort selon la revendication 8, **caractérisé en ce que** la rainure d'étranglement possède des sections transversales différentes le long de sa longueur.

11. Système de ressort selon la revendication 1, **caractérisé en ce que** le ressort de traction est un ressort de traction à boudin (9).

12. Système de ressort selon la revendication 11, **caractérisé en ce que** le ressort de traction à boudin (9) entoure le cylindre (2) avec un jeu radial.

13. Système de ressort selon la revendication 1, **caractérisé en ce que** la longueur axiale du piston (3) correspond au moins essentiellement à la longueur axiale du cylindre (2).

14. Système de ressort selon la revendication 1, **caractérisé en ce que** la première partie de traction (1) et le cylindre (2) et/ou la deuxième partie de traction (21) et la tige de piston (6) et/ou le piston (3) sont réalisés d'une seule pièce.

15. Système de ressort selon la revendication 14, **caractérisé en ce que** la première partie de traction (1) et le cylindre (2) et/ou la deuxième partie de traction (21) et la tige de piston (6) et/ou le piston (3) sont des pièces en plastique, en particulier des pièces en plastique moulées par injection.

16. Système de ressort selon la revendication 11, **caractérisé en ce que** la première partie de traction (1) et/ou la deuxième partie de traction (21) possèdent une surface périphérique cylindrique, qui est pourvue d'un filetage extérieur (8), sur lequel une extrémité du ressort de traction à boudin (9) peut être vissée à l'aide de ses spires.

17. Système de ressort selon la revendication 16, **caractérisé en ce que** l'une et/ou l'autre extrémité libre du ressort de traction à boudin (9) est formée en forme de crochet (10) dépassant axialement au-delà de la première et/ou de la deuxième partie de traction (1, 21), qui forme le premier et/ou le deuxième élément de fixation.

18. Système de ressort selon la revendication 1, **caractérisé en ce que** la deuxième partie de traction (21) peut être déplacée axialement vers le piston (3) ou vers la tige de piston (6).

19. Système de ressort selon la revendication 18, **caractérisé en ce que** la deuxième partie de traction (21) est un écrou (22) vissé sur une douille (24) pourvue d'un filetage extérieur (23), la douille (24) étant supportée axialement sur le piston (3) par son extrémité tournée vers la première partie de traction (1).

20. Système de ressort selon la revendication 19, **caractérisé en ce que** la douille (24) est disposée de manière guidée par coulissement axial sur la tige de piston (6).

21. Système de ressort selon la revendication 18, **caractérisé en ce que** la deuxième partie de traction (21) peut être bloquée par incrément ou en continu dans plusieurs positions axiales sur la tige de piston (6).

22. Système de ressort selon la revendication 21, **caractérisé en ce que** la deuxième partie de traction est un écrou vissé sur la tige de piston pourvue d'un filetage extérieur.

23. Système de ressort selon la revendication 21, **caractérisé en ce que** la deuxième partie de traction possède un tourillon de fixation qui porte à l'une de ses extrémités le deuxième élément de fixation, et qui pénètre dans un évidement coaxial de la tige de piston, dans lequel il peut être bloqué dans plusieurs positions axiales par un ou plusieurs éléments de blocage.

24. Système de ressort selon la revendication 23, **caractérisé en ce que** la tige de piston possède un évidement transversal, dans lequel peut être inséré un verrou qui pénètre par engagement positif dans l'un de plusieurs évidements de blocage correspondants du tourillon de fixation réalisés à distance axiale les uns des autres sur le tourillon de fixation.

25. Système de ressort selon la revendication 24, **caractérisé en ce que** le tourillon de fixation est pourvu d'un côté ou des deux côtés de rangées de dents et les espaces entre les dents des rangées de dents forment les évidements de blocage.

26. Système de ressort selon la revendication 1, **caractérisé en ce que** le ressort de traction (9) peut être fixé dans plusieurs positions axiales sur la première partie de traction et/ou sur la deuxième partie de traction ou sur la tige de piston (6).

27. Système de ressort selon la revendication 26, **caractérisé en ce que** l'extrémité du ressort de traction (9) tournée vers la première partie de traction et/ou tournée vers la deuxième partie de traction (21) est réalisée sous forme de crochet (31) et peut être accrochée dans l'un de plusieurs évidements (30) disposés axialement les uns derrière les autres.

28. Système de ressort selon la revendication 27, **caractérisé en ce que** dans la première partie de traction et/ou dans la deuxième partie de traction ou dans la tige de piston (6) est réalisée une fente de réglage coaxiale (32), de laquelle partent des fentes de blocage (33) de longueur limitée à distance axiale les unes des autres, lesquelles sont réalisées radialement ou de manière inclinée par rapport au ressort de traction.
